# EUROPÄISCHE PATENTSCHRIFT

(11) **EP 2 380 425 B1**
(45) Veröffentlichungstag und Bekanntmachung des Hinweises auf die Patenterteilung: **20.02.2013**
(21) Anmeldenummer: 11003189.5
(22) Anmeldetag: 15.04.2011
(51) Int. Cl.: A01D 34/64

(54) **Aufsitzmäher mit Keilriemenantrieb**
Riding mower with a V-belt drive
Tondeuse autoportée dotée d'un entraînement à courroie trapézoïdale

(30) Priorität: 21.04.2010 DE 102010017989
(43) Veröffentlichungstag der Anmeldung: 26.10.2011
(73) Patentinhaber: AL-KO Kober AG, 89359 Kötz (DE)
(72) Erfinder: Kempfle, Thomas, 89346 Bibertal (DE); Lippl, Wilhelm, 89359 Großkötz (DE); Strazzeri, Sandro, 89340 Leipheim (DE); De Filippo, Antonio, 73342 Bad Ditzenbach (DE)
(74) Vertreter: Binder, Armin

(56) Entgegenhaltungen:
- EP-A2- 2 193 983
- US-A- 4 787 646
- US-A1- 2002 035 825

## Beschreibung

Die Erfindung betrifft einen Aufsitzmäher mit Keilriemenantrieb, aufweisend eine Tragkonstruktion mit zwei Längsseiten, einen Antriebsmotor, ein Getriebe und einen Keilriemenantrieb mit mindestens einem Antriebskeilriemen und mehreren Umlenkrollen für diesen Antriebskeilriemen zur kraftschlüssigen Verbindung zwischen Antriebsmotor und Getriebe.

Ein ähnlicher Aufsitzmäher, bei denen ein Fahrgetriebe mit Hilfe eines Motors angetrieben wird, wobei zur Kraftübertragung zwischen Motor und Fahrgetriebe ein Keilriemenantrieb verwendet wird, ist aus der Druckschrift US-A-2003/0000191 bekannt. Ein Problem bei solchen keilriemenangetriebenen Aufsitzmähern besteht darin, dass der Nutzer dieses Aufsitzmähers und manchmal auch Personen im Umkreis des Nutzers durch den Keilriemenantrieb gefährdet sind, sobald sie mit ihren Extremitäten unter das Chassis des Aufsitzmähers gelangen. Es besteht dabei die Gefahr, dass Hände oder Füße durch den schnell bewegten Antriebskeilriemen zum Beispiel zwischen die Umlenkrolle und den Antriebskeilriemen selbst gelangen, wodurch schwerste Verletzungen entstehen können.

Grundsätzlich ist es zwar möglich, einen separaten Keilriemenschutz anzubringen, der jeglichen Zugriff auf den Antriebskeilriemen verhindert, jedoch sind die Aufwendungen hierfür relativ groß, so dass andere Wege gesucht werden.

Es ist daher Aufgabe der Erfindung einen Aufsitzmäher mit Keilriemenantrieb zu finden, welcher derart gestaltet ist, dass ohne besondere Abdeckfläche beziehungsweise zumindest durch eine verringerte Anzahl von Abdeckflächen ein ausreichender Schutz der Betreiber und sonstiger Personen gegen mögliche Verletzungen durch den Keilriemenantrieb gewährleistet ist.

Diese Aufgabe wird durch die Merkmal des unabhängigen Patentanspruches gelöst. Vorteilhafte Weiterbildungen der Erfindung sind Gegenstand untergeordneter Ansprüche.

Die Erfinder haben erkannt, dass es möglich ist, den Keilriemenantrieb in den Schutz von ohnehin bestehenden Längsträgern in der Tragkonstruktion zu verlegen, so dass der laufende Antriebskeilriemen soweit abgedeckt ist, dass kein unbeabsichtigtes Hineingreifen in den laufenden Antriebskeilriemen möglich ist. Hierzu wird der Antriebskeilriemen mit Hilfe von entsprechend angeordneten Umlenkrollen über den größten Teil des Weges seines Laufes derart im Bereich von L- und/oder C-Profilen geführt, dass der Antriebskeilriemen nicht mehr direkt von außen zugänglich ist.

Entsprechend diesem Grundgedanken schlagen die Erfinder einen Aufsitzmäher mit einer Tragkonstruktion mit zwei Längsseiten, einem Antriebsmotor, einem Getriebe und einem Keilriemenantrieb mit mindestens einem Antriebskeilriemen und mehreren Umlenkrollen für diesen Antriebskeilriemen zur kraftschlüssigen Verbindung zwischen Antriebsmotor und Getriebe, vor, der dadurch verbessert ist, dass:
- die Tragkonstruktion zwei an den Längsseiten seitlich verlaufende L- oder C-Profile aufweist, wobei jedes Profil einen rechteckigen länglichen Hohlraum beschreibt und die derart spiegelbildlich zu einer senkrechten Ebene entlang der Längsachse der Tragkonstruktion so ausgerichtet sind, dass jeweils ein Schenkel an der Außenseite und ein Schenkel an der Unterseite verläuft, und
- die Umlenkrollen derart angeordnet sind, dass zumindest ein Teil des Antriebskeilriemens entlang der seitlich verlaufenden L- oder C-Profile und innerhalb eines von den Schenkeln der L- oder C-Profile jeweils umfassten rechteckigen Hohlraumes und außerdem der größte Teil der Länge des Antriebskeilriemens innerhalb der von den Profilen gebildeten Hohlräume verläuft.

Bei einer solchen Ausführung eines Aufsitzmähers verläuft der Antriebskeilriemen geschützt außerhalb der Zugriffsmöglichkeit durch den Bediener beziehungsweise dritte Personen.

Vorteilhaft ist es dabei, wenn nicht nur ein Teil, sondern der größte Teil der Länge des Antriebskeilriemens innerhalb der von den Profilen gebildeten Hohlräume verläuft.

Es wird aber darauf hingewiesen, dass unter Hohlraum kein geschlossener Hohlraum zu verstehen ist, sondern jeweils ein virtuell gedachter rechteckiger Hohlraum, der durch die Schenkel des L- beziehungsweise C-Profils definiert ist.

Vorteilhaft ist es bei dieser Ausführung des Aufsitzmähers, wenn der Antriebskeilriemen motorseitig eine Keilriemenscheibe, getriebeseitig eine weitere Keilriemenscheibe und dazwischen mehrere Umlenkrollen zumindest teilweise umschließt.

Werden neben der motorseitigen und der getriebeseitigen Keilriemenscheibe genau vier Umlenkrollen verwendet, so kann der Antriebskeilriemen weitgehend parallel entlang der Profile geführt werden und verschwindet auf diese Weise über eine relativ lange Strecke in dem von diesen gebildeten rechteckigen Hohlraum.

Für den Fall, dass eine Spannrolle im Verlauf des Antriebskeilriemens notwendig ist, besteht die Möglichkeit, eine der Umlenkrollen als Spannrolle auszuführen.

Bezüglich der Ausgestaltung beziehungsweise Anordnung der mindestens einen Umlenkrolle kann es besonders vorteilhaft sein, wenn diese derart im Bereich der seitlichen Profile angeordnet ist, dass der freie Abstand zwischen der mindestens einen Umlenkrolle und einem parallel zur Rotationsachse der mindestens einen Umlenkrolle stehenden Schenkel des Profils kleiner ist, als die Keilriemenhöhe des Antriebskeilriemens.

Durch diese Ausführung wird ein Antriebskeilriemen, der einmal auf die Umlenkrollen aufgelegt wurde, zwischen den Schenkel des Profils und dem Profil der Umlenkrolle sicher gehalten und kann so lange er nicht stark beschädigt beziehungsweise zerrissen wird, nicht mehr aus seiner Führung herausspringen. Durch diese Ausführung werden die sonst üblichen Klammern, die das Herausspringen des Antriebskeilriemens von der Umlenkrolle verhindern sollen, eingespart.

Da in den meisten Fällen der Antriebskeilriemen im Bereich der motorseitigen Keilriemenscheibe beziehungsweise im Bereich der getriebenseitigen Keilriemenscheibe zur Mittelachse des Aufsitzmähers gelenkt werden muss, muss er dort auch zwangsläufig den Bereich der L- oder C-Profile verlassen, so dass dort eventuell ein zusätzliches Abdeckblech angebracht werden sollte.

Eine weitere vorteilhafte Ausgestaltung des erfindungsgemäßen Aufsitzmähers sieht vor, dass zumindest eine der Umlenkrollen mit ihrer Drehachse unmittelbar an einem Schenkel der L- oder C-Profile befestigt ist. Durch diese Ausgestaltung können zusätzliche Haltewinkel oder ähnliche Halterungen eingespart werden und damit für eine günstige Produktion gesorgt werden.

Im Folgenden wird die Erfindung anhand eines bevorzugten Ausführungsbeispieles mit Hilfe der Figuren näher beschrieben, wobei nur die zum Verständnis der Erfindung notwendigen Merkmale dargestellt sind.

Es zeigen im Einzelnen:
- FIG 1:: 3D-Ansicht einer Tragkonstruktion eines Aufsitzmähers;
- FIG 2:: Seitenansicht der Tragkonstruktion eines Aufsitzmähers;
- FIG 3:: Aufsicht von oben auf die Tragkonstruktion aus FIG 1 mit einem Ausbruch im Bereich der Antriebskeilriemenführung nahe den Längsprofilen;
- FIG 4:: Schnitt A-A aus FIG 2;
- FIG 5:: Schnitt B-B aus FIG 2;
- FIG 6:: Detail C aus der FIG 5;
- FIG 7:: L-Profil mit umschlossenem rechteckigen Hohlraum;
- FIG 8:: C-Profil-mit umschlossenem rechteckigen Hohlraum.

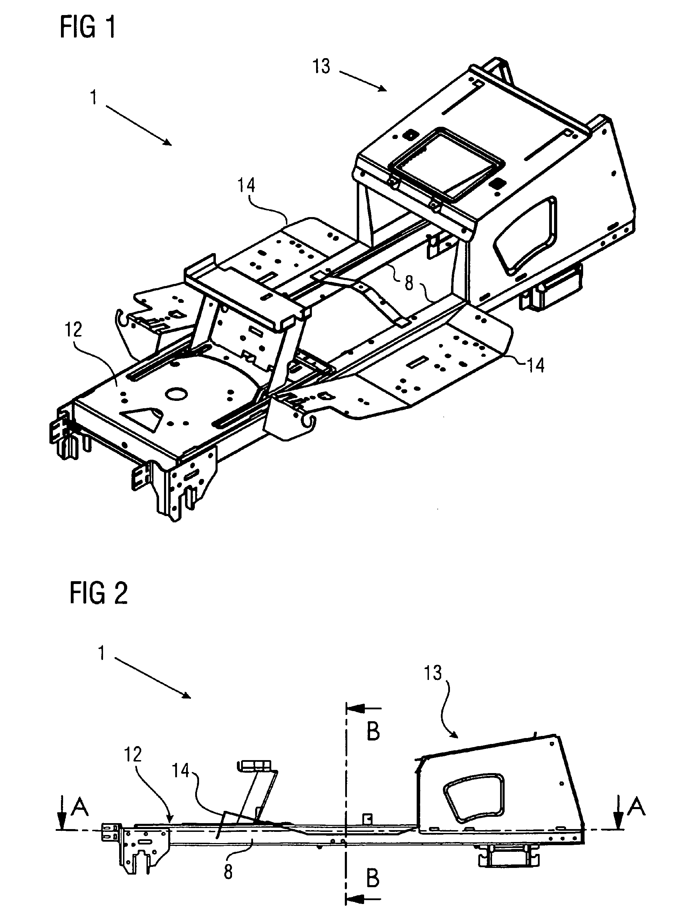

Die **Figur 1** zeigt eine schräge Ansicht einer dreidimensionalen dargestellten Tragkonstruktion 1 eines erfindungsgemäßen Aufsitzmähers. Die Tragkonstruktion 1 besteht im Wesentlichen aus zwei seitlich verlaufenden C-Profilen 8, an denen im hinteren Bereich ein Sitzträger 13 angebracht ist, im vorderen Bereich ein Motorträger 12, der die beiden C-Profile 8 verbindet, und etwa in der Mitte der Tragkonstruktion 1, links und rechts an den C-Profilen, jeweils ein Fußblech 14 angeordnet ist.

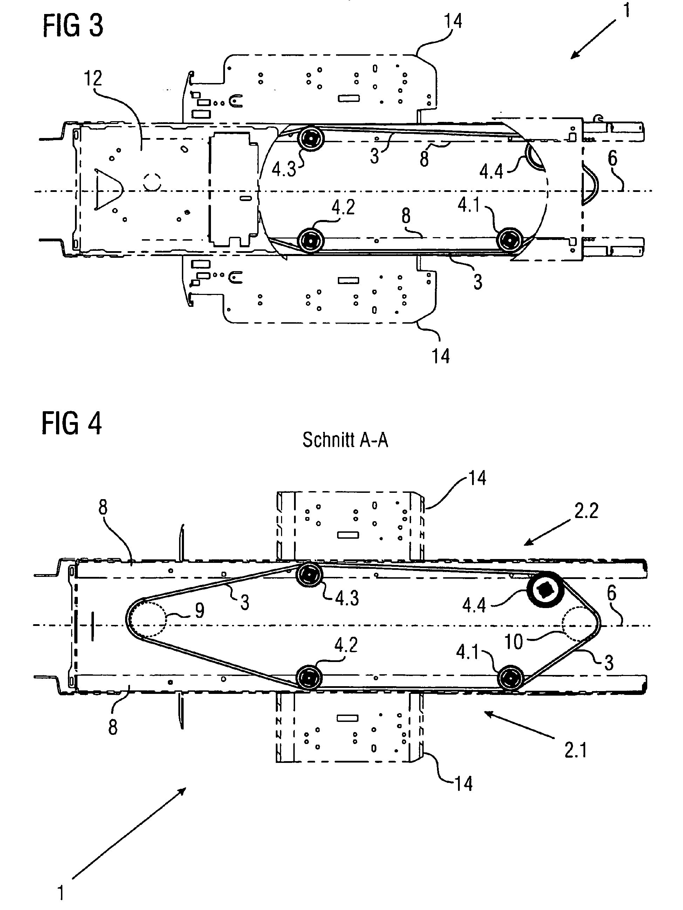

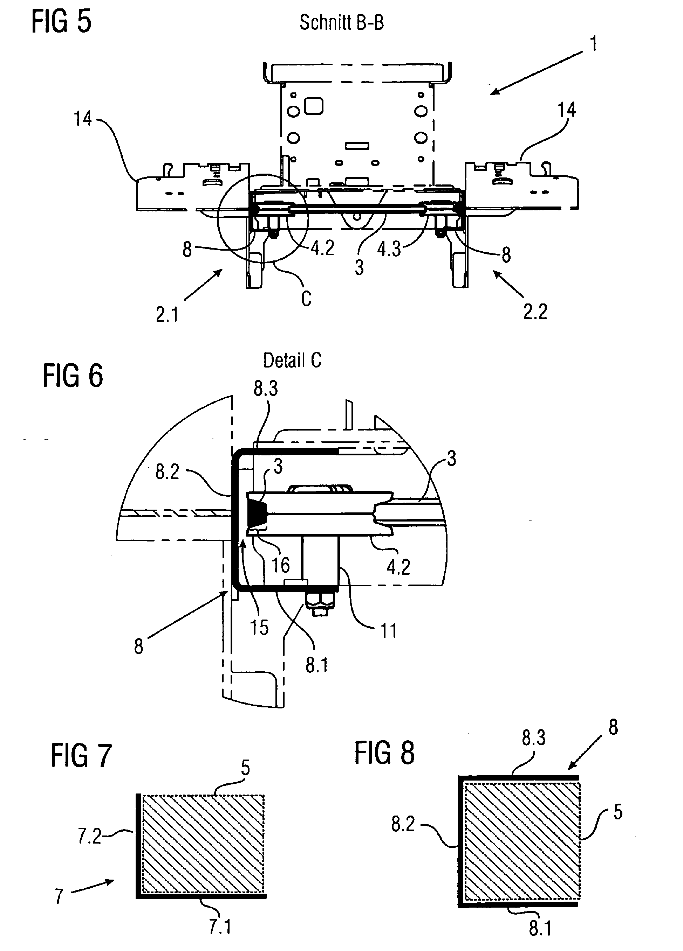

In der **Figur 2** ist eine Seitenansicht dieser Tragkonstruktion 1 mit dem Sitzträger 13, dem vorne angeordneten Motorträger 12 und dem Fußblech 14, welches an dem seitlich angeordneten C-Profil 8 befestigt ist, gezeigt. Eingezeichnet sind des Weiteren zwei Schnitte A-A und B-B, die in den Figuren 4 und 5 gezeigt werden.

Die **Figur 3** zeigt die Tragkonstruktion 1 in einer Draufsicht mit dem vorne liegenden Motorträger 12 und den seitlich angeordneten Fußblechen 14. Zur Darstellung der Erfindung ist ein Ausbruch im Bereich des Keilriemenantriebs gezeigt, in dem die vier Umlenkrollen 4.1 bis 4.4 zu erkennen sind. Des Weiteren ist der Antriebskeilriemen 3, der im Bereich der C-Profile 8 verläuft, ebenfalls zu sehen. Zusätzlich ist die Längsachse 6 eingezeichnet, zu der die seitlich verlaufenden C-Profile 8 spiegelbildlich mit nach innen offenem Profil angeordnet sind.

Die **Figur 4** zeigt den erfindungsgemäß Verlauf des Antriebskeilriemens 3 im Schnitt A-A aus der Figur 2. Es sind wieder die an der linken Seite 2.1 und rechten Seite 2.2 der Tragkonstruktion 1 angeordneten C-Profile 8 zu erkennen, wobei der Antriebskeilriemen 3 vorne um die gestrichelt angedeutete motorseitige Keilriemenscheibe 9 verläuft, von dort über die Umlenkrollen 4.2 und 4.3 in den vom C-Profil abgedeckten Hohlraum geführt wird und nach hinten zu den Umlenkrollen 4.1 und 4.4 geführt wird, von wo aus er die getriebeseitige Keilriemenscheibe 10 umschlingt. Die hier gezeigte Umlenkrolle 4.4 ist federnd gelagert und wirkt daher als Spannrolle für den Keilriemenantrieb.

In der **Figur 5** ist der Schnitt B-B durch die Tragkonstruktion 1 zu erkennen, wobei hier besonders gut zu sehen ist, wie der Antriebskeilriemen 3 auf der linken und rechen Seite 2.1, 2.2 der Tragkonstruktion 1 innerhalb der Abdeckung durch das C-Profil 8 verläuft und dadurch von unbeabsichtigten Zugriffen geschützt ist.

Die Figur 5 zeigt auch ein Detail C, welches in der **Figur 6** näher dargestellt ist. Hier ist vergrößert der Bereich der Anordnung einer Umlenkrolle 4.2 innerhalb des C-Profils 8 zu erkennen. Diese Umlenkrolle 4.2 wird durch eine Drehachse gelagert, die am unteren Schenkel 8.1 des C-Profils 8 befestigt ist. Die Befestigung ist dabei derart ausgeführt, dass der Abstand 15 zwischen der Umlenkrolle 4.2 und dem seitlichen Schenkel 8.2 des C-Profils kleiner ausfällt, als die Keilriemenhöhe 16 des Antriebskeilriemens 3, so dass dieser auch bei einem Lösen der Keilriemenspannung nicht aus der Führung der Umlenkrolle 4.2 entweichen kann.

Ergänzend ist in den **Figuren 7** **und 8** nochmals der Hohlraum gestrichelt dargestellt, der durch die Schenkel 7.1 und 7.2 beziehungsweise 8.1., 8.2 und 8.3 des L-Profils 7 beziehungsweise des C-Profils 8 gebildet wird und innerhalb denen sich der Antriebskeilriemen erfindungsgemäß zumindest über einen Teil seiner Strecke befinden soll.

Durch die erfindungsgemäße Ausgestaltung des Aufsitzrasenmähers, insbesondere die Anordnung seines Keilriermenantriebs innerhalb der Tragkonstruktion wird damit also erreicht, dass ohne besonderen zusätzlichen Kosten eine Führung des Antriebskeilriemens derart erreicht wird, dass dieser entsprechend geschützt verläuft und damit eine Verletzungsgefahr drastisch verringert wird.

### Bezugszeichenliste

- 1: Tragkonstruktion
- 2.1: linke Längsseite
- 2.2: rechte Längsseite
- 3: Antriebskeilriemen
- 4.1-4.4: Umlenkrollen
- 5: Hohlraum
- 6: Längsachse
- 7: L-Profil
- 7.1,7.2: Schenkel des L-Profils
- 8: C-Profil
- 8.1,8.2,8.3: Schenkel des C-Profils
- 9: Keilriemenscheibe motorseitig
- 10: Keilriemenscheibe getriebeseitig
- 11: Drehachse einer Umlenkrolle
- 12: Motorträger
- 13: Sitzträger
- 14: Fußbleche
- 15: Abstand Umlenkrolle - Profilschenkel
- 16: Höhe des Antriebskeilriemens

## Patentansprüche

1. Aufsitzmäher aufweisend:
1.1. eine Tragkonstruktion, (1) mit zwei Längsseiten (2.1, 2.2),
1.2. einen Antriebsmotor,
1.3. ein Getriebe,
1.4. einen Keilriemenantrieb mit mindestens einem Antriebskeilriemen (3) und mehreren Umlenkrollen (4.4-4.4) für diesen Antriebskeilriemen (3) zur kraftschlüssigen Verbindung zwischen Antriebsmotor und Getriebe,
**dadurch gekennzeichnet, dass**
1.5. die Tragkonstruktion (1) zwei an den Längsseiten (2.1, 2.2) seitlich verlaufende L- oder C-Profile aufweist, wobei jedes Profil einen rechteckigen länglichen Hohlraum (5) beschreibt und die derart spiegelbildlich zu einer senkrechten Ebene entlang der Längsachse (6) der Tragkonstruktion (1) so ausgerichtet sind, dass jeweils ein Schenkel (7.2, 8.2) an der Außenseite und ein Schenkel an der Unterseite (7.1, 8.1) verläuft,
1.6. die Umlenkrollen (4.1-4.4) derart angeordnet sind, dass zumindest ein Teil des Antriebskeilriemens (3) entlang der seitlich verlaufenden L- oder C-Profile (7, 8) und innerhalb eines von den Schenkeln (7.1, 7.2, 8.1, 8.2, 8.3) der L- oder C-Profile (7, 8) jeweils umfassten rechteckigen Hohlraumes (5) und außerdem der größte Teil der Länge des Antriebskeilriemens (3) innerhalb der von den Profilen gebildeten Hohlräume (5) verläuft.

2. Aufsitzmäher gemäß dem voranstehenden Patentanspruch 1, **dadurch gekennzeichnet, dass**, der Antriebskeilriemen (3) motorseitig eine Keilriemenscheibe (9), getriebeseitig eine Keilriemenscheibe (10) und dazwischen mehrere Umlenkrollen (4.1-4.4) zumindest teilweise umschließt.

3. Aufsitzmäher gemäß dem voranstehenden Patentanspruch 2, **dadurch gekennzeichnet, dass** genau vier Umlenkrollen (4.1-4.4) vorgesehen sind, die den Antriebskeilriemen (3) entlang der Profile führen.

4. Aufsitzmäher gemäß einem der voranstehenden Patentansprüche 1 bis 3, **dadurch gekennzeichnet , dass** eine der Umlenkrollen als Spannrolle (4.4) ausgeführt ist.

5. Aufsitzmäher (1) gemäß einem der voranstehenden Patentansprüche 1 bis 4, **dadurch gekennzeichnet dass** mindestens eine Umlenkrolle (4.1.-4.4) derart im Bereich der seitlichen Profile (8) angeordnet ist, dass der freie Abstand (15) zwischen der mindestens einen Umlenkrolle (4.2) und einem parallel zur Rotationsachse der mindestens einen Umlenkrolle (4.2) stehenden Schenkel (8.2) des Profils kleiner ist, als die Keilriemenhöhe des Antriebskeilriemens (3).

6. Aufsitzmäher gemäß einem der voranstehenden Patentansprüche 1 bis 5, **dadurch gekennzeichnet, dass** in dem Bereich, in dem der Antriebskeilriemen (3) nicht in den Profilen (8) verläuft, ein Abdeckblech vorgesehen ist, welches einen freien Zugriff auch den Antriebskeilriemen (3) von unten verhindert.

7. Aufsitzmäher gemäß einem der voranstehenden Patentansprüche 1 bis 6, **dadurch gekennzeichnet, dass** zumindest eine der Umlenkrollen (4.1-4.4) mit ihrer Drehachse (11) unmittelbar an einem Schenkel (8.1) der L- oder C-Profile (7, 8) befestigt ist.

## Claims

1. Riding mower, having:
1.1. a supporting structure (1) with two longitudinal sides (2.1, 2.2),
1.2. a driving motor,
1.3. a gearbox,
1.4. a V-belt drive with at least one driving V-belt (3) and a plurality of deflection pulleys (4.1-4.4) for said driving V-belt (3) for the frictional connection between the driving motor and gearbox,
**characterized in that**
1.5. the supporting structure (1) has two L- or C-profiles running laterally on the longitudinal sides (2.1, 2.2), wherein each profile describes a rectangular elongate cavity (5), and said profiles being oriented in a mirror-inverted manner to a perpendicular plane along the longitudinal axis (6) of the supporting structure (1) in such a manner that one limb (7.2, 8.2) runs on the outer side and one limb (7.1, 8.1) runs on the lower side,
1.6. the deflection pulleys (4.1-4.4) are arranged in such a manner that at least part of the driving V-belt (3) runs along the laterally running L- or C-profiles (7, 8) and within a rectangular cavity (5) in each case surrounded by the limbs (7.1, 7.2, 8.1, 8.2, 8.3) of the L- or C-profiles (7, 8), and, in addition, most of the length of the driving V-belt (3) runs within the cavities (5) formed by the profiles.

2. Riding mower according to preceding patent Claim 1, **characterized in that** the driving V-belt (3) at least partially encloses a V-belt pulley (9) on the motor side, a V-belt pulley (10) on the gearbox side and a plurality of deflection pulleys (4.1-4.4) in between.

3. Riding mower according to preceding patent Claim 2, **characterized in that** precisely four deflection pulleys (4.1-4.4) guide the driving V-belt (3) along the profiles.

4. Riding mower according to one of the preceding patent Claims 1 to 3, **characterized in that** one of the deflectional pulleys is designed as a tension pulley (4.4).

5. Riding mower (1) according to one of the preceding patent Claims 1 to 4, **characterized in that** at least one deflection pulley (4.1-4.4) is arranged in the region of the lateral profiles (8) in such a manner that the free distance (15) between the at least one deflection pulley (4.2) and a profile limb (8.2) parallel to the axis of rotation of the at least one deflection pulley (4.2) is smaller than the height of the driving V-belt (3).

6. Riding mower according to one of the preceding patent Claims 1 to 5, **characterized in that** a covering plate is provided in the region in which the driving V-belt (3) does not run in the profiles (8), said covering plate also preventing free access to the driving V-belt (3) from below.

7. Riding mower according to one of the preceding patent Claims 1 to 6, **characterized in that** at least one of the deflection pulleys (4.1-4.4) is fastened by means of the rotary axle (11) thereof directly to a limb (8.1) of the L- or C-profiles (7, 8).

## Revendications

1. Tondeuse autoportée comprenant :
1.1 une construction de support (1) comprenant deux côtés longitudinaux (2.1, 2.2),
1.2 un moteur d'entraînement,
1.3 une transmission,
1.4 un entraînement à courroie trapézoïdale comprenant au moins une courroie trapézoïdale d'entraînement (3) et plusieurs poulies de renvoi (4.1-4.4) pour cette courroie trapézoïdale d'entraînement (3) en vue d'une liaison par force entre le moteur d'entraînement et la transmission,
**caractérisée en ce que**
1.5 la construction de support (1) comprend deux profilés en L ou en C s'étendant latéralement sur les côtés longitudinaux (2.1, 2.2), chaque profilé délimitant un espace creux (5) rectangulaire allongé, et qui sont orientés suivant une symétrie spéculaire par rapport à un plan vertical le long de l'axe longitudinal (6) de la construction de support (1) de telle sorte qu'une branche (7.2, 8.2) s'étend respectivement sur le côté extérieur et une branche (7.1, 8.1) s'étend respectivement sur le côté inférieur,
1.6 les poulies de renvoi (4.1-4.4) sont disposées de telle sorte qu'au moins une partie de la courroie trapézoïdale d'entraînement (3) s'étend le long des profilés en L ou en C (7, 8) s'étendant latéralement et à l'intérieur d'un espace creux (5) rectangulaire entouré respectivement par les branches (7.1, 7.2, 8.1, 8.2, 8.3) des profilés en L ou en C (7, 8) et en outre la plus grande partie de la longueur de la courroie trapézoïdale d'entraînement (3) s'étend à l'intérieur de l'espace creux (5) formé par les profilés.

2. Tondeuse autoportée selon la revendication précédente 1, **caractérisée en ce que** la courroie trapézoïdale d'entraînement (3) entoure au moins partiellement une poulie à courroie trapézoïdale (9) du côté du moteur, une poulie à courroie trapézoïdale (10) du côté de la transmission et plusieurs poulies de renvoi (4.1-4.4) entre celles-ci.

3. Tondeuse autoportée selon la revendication précédente 2, **caractérisée en ce qu'**exactement quatre poulies de renvoi (4.1-4.4) sont prévues, lesquelles guident la courroie trapézoïdale d'entraînement (3) le long des profilés.

4. Tondeuse autoportée selon l'une quelconque des revendications précédentes 1 à 3, **caractérisée en ce que** l'une des poulies de renvoi est réalisée sous forme de poulie de tension (4.4).

5. Tondeuse autoportée (1) selon l'une quelconque des revendications précédentes 1 à 4, **caractérisée en ce qu'**au moins une poulie de renvoi (4.1-4.4) est disposée dans la région des profilés latéraux (8) de telle sorte que l'intervalle libre (15) entre l'au moins une poulie de renvoi (4.2) et une branche (8.2), dressée parallèlement à l'axe de rotation de l'au moins une poulie de renvoi (4.2), du profilé est plus petit que la hauteur de courroie trapézoïdale de la courroie trapézoïdale d'entraînement (3).

6. Tondeuse autoportée selon l'une quelconque des revendications précédentes 1 à 5, **caractérisée en ce qu'**une tôle de recouvrement est prévue dans la région dans laquelle la courroie trapézoïdale d'entraînement (3) ne s'étend pas dans les profilés (8), laquelle tôle de recouvrement empêche un accès libre par le dessous à la courroie trapézoïdale d'entraînement (3).

7. Tondeuse autoportée selon l'une quelconque des revendications précédentes 1 à 6, **caractérisée en ce qu'**au moins l'une des poulies de renvoi (4.1-4.4) est fixée, par l'intermédiaire de son axe de rotation (11), directement à une branche (8.1) des profilés en L ou en C (7, 8).
